# EUROPÄISCHE PATENTSCHRIFT

(11) **EP 1 119 085 B1**
(45) Veröffentlichungstag und Bekanntmachung des Hinweises auf die Patenterteilung: **18.10.2006**
(21) Anmeldenummer: 00128384.5
(22) Anmeldetag: 22.12.2000
(51) Int. Cl.: H02B 1/052

(54) **Schnellbefestigung für ein elektrisches Installationsgerät**
Quick mounting for an electrical installation apparatus
Fixation rapide pour appareil électrique d'installation

(30) Priorität: 20.01.2000 DE 10002125
(43) Veröffentlichungstag der Anmeldung: 25.07.2001
(73) Patentinhaber: ABB PATENT GmbH, 68309 Mannheim (DE)
(72) Erfinder: Eppe, Klaus-Peter, 69429 Waldbrunn (DE); Weber, Ralf, 69123 Heidelberg (DE)
(74) Vertreter: Miller, Toivo

(56) Entgegenhaltungen:
- DE-A- 2 523 197
- DE-A- 4 439 672
- DE-A- 19 836 890

## Beschreibung

Die Erfindung betrifft eine Schnellbefestigung für ein elektrisches Installationsgerät, das auf eine Hutprofiltragschiene aufschnappbar ist, nach dem Oberbegriff des Anspruches 1. Eine Schnellbefestigung dieser Art ist in DE 25 23 197 A beschrieben.

Derartige Schnellbefestigungen sind in großer Anzahl bekannt geworden. Sie umfassen an der Bodenseite eines elektrischen Installationsgerätes eine Ausnehmung, an der senkrecht zur Befestigungsebene verlaufende Wandungen vorgesehen sind, an denen eine bewegliche und eine feststehende Nase angeordnet sind. Mit der beweglichen und der feststehenden Nase kann das Installationsgerät auf einer Hutprofiltragschiene aufgeschnappt werden, in dem die feststehende Nase über die in einer Installationsverteilung oben liegenden Kante einer Hutprofiltragschiene aufgesetzt und das Installationsgerät danach durch Verschwenken mit der beweglichen Nase über die unten liegende Kante geschnappt wird.

Die bewegliche Nase ist meist an einem Schieber angeformt, der aus Metall oder Kunststoff hergestellt ist und in einer Ausnehmung am Installationsgerät verschiebbar gelagert ist, wobei eine Druckfeder vorgesehen ist, die den Schieber gegen die Hutprofiltragschiene drückt. Zur Demontage des Installationsgerätes benötigt man ein Werkzeug, mit dem der Schieber von der Hutprofiltragschiene zurückgezogen wird.

Wenn das Installationsgerät ein Leitungsschutzschalter oder Fehlerstromschutzschalter ist, der auf seiner Zugangsseite mit anderen Leitungsschutz- oder Fehlerstromschutzschaltern über eine Sammelschiene oder eine Sammelschienenanordnung verbunden ist, dann ist die Demontage des Installationsgerätes schwierig, weil ein Abschwenken des Installationsgerätes durch die Sammelschienenanordnung verhindert wird. Um das Installationsgerät demontieren zu können, muß die Sammelschierienanordnung ausgebaut werden, was bedeutet, daß andere über die entsprechenden Installationsgeräte abzusichernde Netze abgeschaltet werden müssen. Danach ist die Sammelschiene zu demontieren und danach erst kann das Installationsgerät ausgebaut und ggf. durch ein neues ersetzt werden.

Es ist eine Schnellbefestigung bekannt geworden, bei der das Installationsgerät gegenüber dem Schieber soweit verschoben werden kann, daß das Installationsgerät von der Sammelschienenanordnung frei kommt; auch diese bekannten Anordnungen benötigen ein Werkzeug.

Aufgabe der Erfindung ist es, eine Schnellbefestigung für ein elektrisches Installationsgerät der eingangs genannten Art zu schaffen, bei dem der Ausbau des Installationsgerätes aus der Installationsverteilung ohne Werkzeug einfach möglich ist.

Diese Aufgabe wird erfindungsgemäß gelöst durch die Merkmale des Anspruches 1.

Erfindungsgemäß also ist die Schnellbefestigung der eingangs genannten Art dadurch gekennzeichnet, daß die Vorsprünge als Leisten ausgebildet sind, die aufeinander zuweisen, daß am ersten Quersteg die an der Hutprofiltragschiene anliegende bewegliche Nase und ein zum zweiten Quersteg vorspringender federnder Arm angeformt sind, an dem eine zum Installationsgerät vorspringende Nase angeordnet ist, so daß der Schieber von der Schmalseite des Installationsgerätes an dem Installationsgerät anbringbar ist, in dem die Leisten in die daran angepaßte Nuten greifen und darin verschiebbar sind und die Nase in einer Vertiefung an der Befestigungsseite des Installationsgerätes einrastet.

Eine weitere vorteilhafte Ausgestaltung der Erfindung besteht darin, daß die federnde Nase gemäß Anspruch 2 V-förmig ausgebildet ist, wobei ein Schenkel der V-Form am ersten Quersteg anschließt und am freien Ende eine Stufung vorgesehen ist, hinter die die Hutprofiltragschiene eingreift. Die offene Seite der V-Form ist dabei zum Boden des Installationsgerätes hingerichtet.

Eine weitere Ausgestaltung der Erfindung ist aus den Merkmalen der Ansprüche 3 bzw. 4 zu entnehmen, in der dargestellt ist, auf welche Weise die V-Form am Rahmen angeformt ist; Dabei überragt die V-Form die eine, der Befestigungsebene des Installationsgerätes entgegengesetzt gerichtete Ebene des Rahmens senkrecht dazu; das freie Ende des freien Schenkels endet dann gemäß Anspruch 4 in Abstand zu der anderen Seite des Rahmens, die auf die Befestigungsfläche bzw. die Bodenfläche des Installationsgerätes zuweist.

Gemäß einer weiteren vorteilhaften Ausgestaltung der Erfindung überragt der federnde Arm den zweiten Quersteg, so daß durch Betätigung des federnden Armes die Nase von der Vertiefung frei kommt.

Wenn eine solche Schnellbefestigung an einem Installationsgerät angebracht ist, an dem eine Sammelschienenanordnung angeschlossen ist, dann ist diese Schnellbefestigung gekennzeichnet durch die Merkmale des Anspruches 6.

Hierdurch ist das Installationsgerät durch verschwenken ohne daß die Sammelschiene demontiert werden muß, von der Hutprofiltragschiene zu entfernen.

Weitere vorteilhafte Ausgestaltungen und Verbesserungen der Erfindung sind den weiteren Ansprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine perspektivische Ansicht eines Schiebers von unten,
- Fig. 2: den Schieber gemäß Fig. 1 in einer perspektivischen Ansicht von oben,
- Fig. 3: den Schieber in einem Installationsgerät montiert,
- Fig. 4: eine Ansicht des Installationsgerätes gemäß Fig. 3, auf einer Hutprofiltragschiene montiert, und
- Fig. 5, 6 und 7: unterschiedliche Stellungen bei der Demontage des Installationsgerätes.

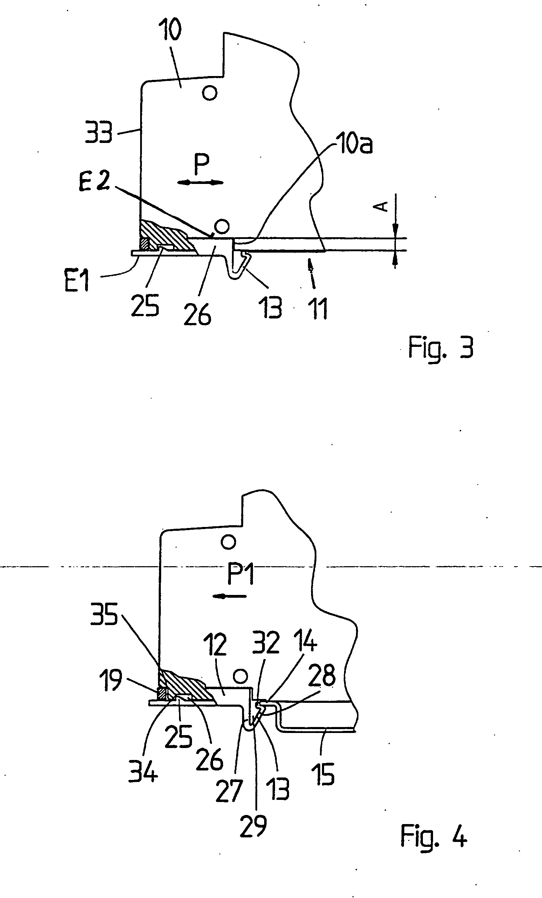

Es sei nun Bezug genommen auf die Fig. 3. Ein elektrisches Installationsgerät 10 besitzt auf seiner Befestigungsseite eine Ausnehmung 11, die nur teilweise dargestellt ist. Am Installationsgerät 10 ist ein Schieber 12 in Pfeilrichtung P horizontal verschiebbar, an dem, wie weiter unten dargestellt werden soll, eine bewegbare Nase 13 angeformt ist, die wie aus Fig. 4 ersichtlich, hinter eine Kante 14 einer Hutprofiltragschiene 15 einrastet. Die zugehörige feststehende Nase, die auf der entgegengesetzten Seite der Ausnehmung 11 liegt wie die Nase 13, ist nicht dargestellt.

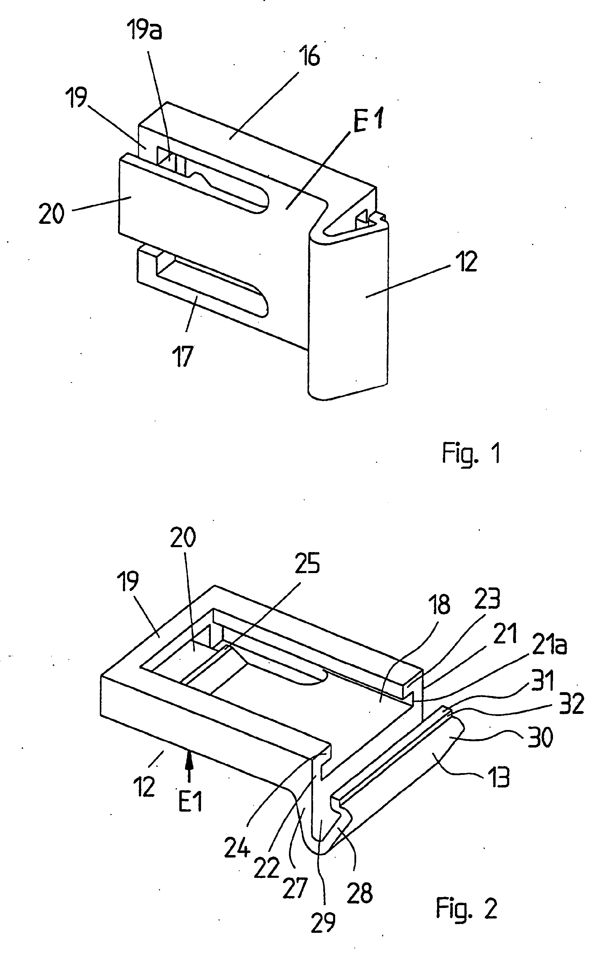

Die Fig. 1 und 2 zeigen nun den Schieber 12 in unterschiedlichen perspektivischen Darstellungen.

Der Schieber 12 besitzt einen Rahmen mit Längsstegen 16 und 17 sowie mit Querstegen 18 und 19. An dem Quersteg 18 ist an der Ebene e 1 des Rahmens die der Befestigungsebene des Installationsgerätes 10 entgegengesetzt liegt, siehe Fig. 3, ein federnder Arm 20 angeformt, der wie aus Fig. 1 ersichtlich ist, den Quersteg 19, im folgenden als zweiter Quersteg 19 bezeichnet, überragt. An den Längsstegen 16 und 17 sind L-förmige Leisten 21 und 22 angeformt, deren abgewinkelte Schenkel 23 und 24 aufeinanderzu gerichtet sind und von dem freien Ende des ersten Quersteges 18 bis zur Innenseite des Quersteges 19 verlaufen.

Damit der federnde Arm 20 den zweiten Quersteg 19 überragen und auch federn kann, ist im zweiten Quersteg 19 auf der Seite des Rahmens, der federnde Arm 20 sich befindet, eine Vertiefung 19 a eingeformt, die der federnde Arm 20 durchgreift und in der der federnde Arm senkrecht zu seiner Längserstreckung ausfedern kann.

Der federnde Arm 20 besitzt eine Rastnase 25, die im montierten Zustand, siehe Fig. 3, 4, in eine Ausnehmung 26 an der Bodenseite des Installationsgerätes einrasten kann.

An der freien Stirnseite des ersten Quersteges 18 ist die bewegliche Nase 13 angeformt. Diese bewegliche Nase ist V-förmig und schließt mit einem Schenkel 27 an der Vorderseite des ersten Quersteges 18 an; der zweite Schenkel 28 der V-Form verläuft in entgegengesetzte Richtung, also zum Installationsgerät hin, so daß die offene Seite 29 der V-Form zum Boden des Installationsgerätes hin offen ist. Der freie Schenkel 28 ist im Bereich seines freien Endes bei 30 zur Stirnfläche des ersten Quersteges zurückgebogen. Hieran schließt sich ein Vorsprung 31 an, der parallel zur vorderen bzw. freien Stirnseite des Quersteges verläuft, wodurch eine Stufung 32 gebildet ist, in die die Kante 14 der Hutprofiltragschiene 15 einrastet.

Das freien Ende des zweiten Schenkels 28 endet in einem Abstand A von der Ebene e 2, die der Ebene e 1 entgegengesetzt liegt und der Befestigungsebene bzw. den Boden des Installationsgerätes gegenüberliegt.

Dabei besitzt das Installationsgerät in der Befestigungsebene eine Stufe 10 a, gegen die der Schieber 12 im nicht auf der Tragschiene montierten Zustand des Installationsgerätes anliegt und zwar mit dem Abschnitt, der zwischen dem freien Ende 31 und der Ebene e 2 liegt. Damit befindet sich der Schieber 12 wenigstens zur Hälfte in einer Ausnehmung 10 b, in der sich auch Rillen 70, siehe weiter unten, befinden, in die dann die Leisten 23 und 24 hineingleiten, wenn der Schieber 12 montiert wird.

Am installationsgerät 10 sind, ausgehend von der in der Zeichnung links befindlichen Schmalseite 33 Rillen vorgesehen und zwar auf beiden Breitseiten, welche Rillen parallel zur Befestigungsebene verlaufen. In diese Rillen werden die Leisten 23 und 24 von der Schmalseite 33 aus eingeschoben und der Schieber ist montiert, wenn die Nase 25 in die Vertiefung 26 einrastet. Bei der Montage des Installationsgerätes drückt die Kante 14 den Schieber 12 in Pfeilrichtung P₁, so daß die Nase 25 an der Kante 34 der Vertiefung 26 anschlägt und der freie Arm 28 oder freie Schenkel 28 der V-Form verformt wird.

Am Übergang zwischen der Bodenseite und der Schmalseite 33 ist ein Rücksprung 35 am Installationsgerät angeformt, in den der zweite Quersteg 19 eingreift. Die Breite des Schiebers 12 entspricht der Breite des Installationsschaltgerätes.

Das Installationsgerät ist in einer Verteilung eingebaut, wobei das Gerät 10 auf der Hutprofiltragschiene 15 aufgerastet ist. In einer Verteilung befinden sich mehrere Installationsgeräte, die mit einem sog. Sammelschienenblock 40 phasenweise miteinander verbunden werden. Ein derartiger Sammelschienenblock 40 ist an sich bekannt. Er besitzt im Querschnitt eine rechteckige Form; aus der im montierten Zustand dem Installationsgerät 10 zugewandten Seite 41 ragen Anschlußfahnen 42 heraus, die an einer nicht näher dargestellten Anschlußklemme im Installationsgerät angeklemmt sind. An der Wand 41 ist eine Nase 43 angeformt, die im montierten Zustand das freie Ende des Armes 20 überdeckt.

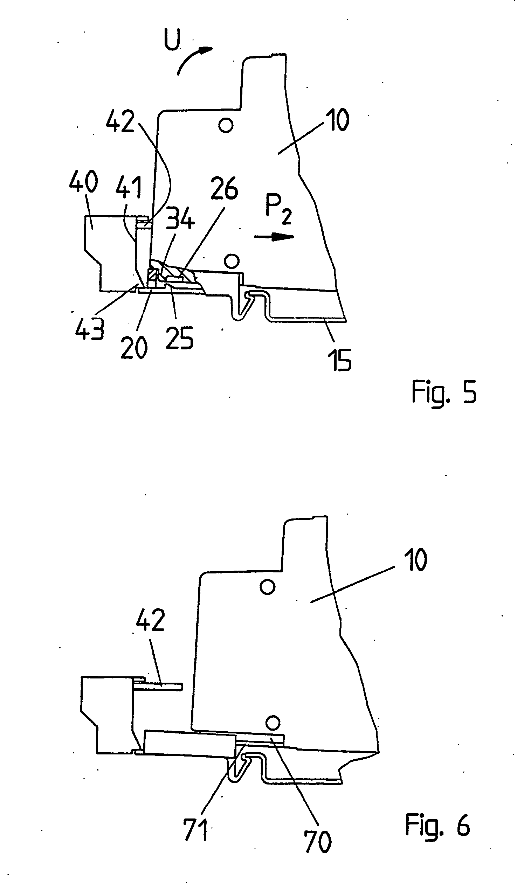

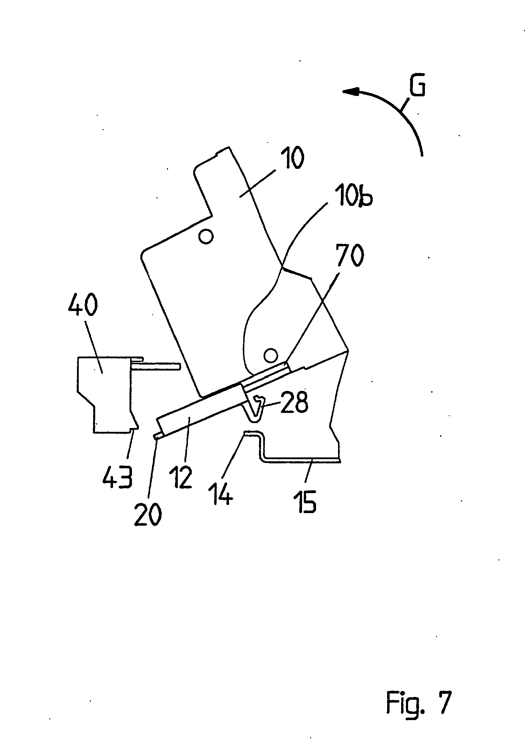

Wenn nun das Installationsgerät 10 demontiert werden soll, dann wird das Installationsgerät zunächst im Uhrzeigersinn U um die feststehende Nase verschwenkt, so daß die Nase 25 aus der Vertiefung 26 heraus und von der Wandung freikomt. Danach kann das Installationsgerät 10 in Pfeilrichtung P₂ verschoben werden, welche Bewegung durch die Nase 25 nicht mehr behindert wird. Die Stellung, in der die Nase 25 von der Wandung 34 freikommt, zeigt die Fig. 5, und in Fig. 6 ist dargestellt, wie das Installationsgerät 10 von den Anschlußfahnen 42 freigekommen ist. Sodann kann, wie aus Fig. 7 ersichtlich, durch Verschwenken des Installationsgerätes 10 entgegen dem Uhrzeigersinn, durch Pfeil G bezeichnet, die bewegbare Nase von der Kante 14 der Hutprofiltragschiene 15 abgehoben werden, um das Installationsgerät vollständig auszubauen.

In Fig. 7 sind in Aufsicht Rillen 70 dargestellt, die sich auf beiden Seiten des Installationsgerätes im Bereich der Befestigungsebene befinden und in die die Leisten 23, 24 hineinpassen.

Bei der Montage des Installationsgerätes 10 ist der Weg genau umgekehrt; zunächst wird das Installationsgerät mit dem Schieber 12 in den Zwischenraum zwischen der Sammelschienenanordnung 40 und der Kante 14 der Hutprofiltragschiene hineinbewegt, bis einerseits der Arm 20 in den Bereich der Nase 43 gelangt; im wesentlichen gleichzeitig hierzu schnappt die bewegbare Nase 28 hinter die freie Kante 14 und das Installationsgerät wird durch Verschieben in Pfeilrichtung P₁ gegenüber dem Schieber 12 soweit verschoben, bis die Nase 25 in die Vertiefung 26 einrastet. Danach sind die Anschlußklemmen für die Anschlußfahnen festzuziehen; das Installationsgerät ist montiert. Es ist selbstverständlich, daß die Breite des Bereiches 71 zwischen den Rillen 70 und der Befestigungsebene entsprechend dem Abstand der Innenflächen der senkrecht zum ersten Quersteg verlaufenden Schenkel 21 a und 22a bemessen ist, damit der Schieber auf das Installationsgerät 10 aufgeschoben werden kann.

Man erkennt aus der Fig. 2, daß die Breite der bewegbaren Nase 13 der Breite des Schiebers 12, gemessen von den Außenflächen der Längsstege 16 und 17 entspricht; dadurch wird ein großflächiges Anliegen der bewegbaren Nase an der Hutprofiltragschiene bewirkt, was eine Erhöhung der Sicherheit gegen Verrutschen bringt.

## Patentansprüche

1. Schnellbefestigung für ein elektrisches Installationsgerät (10), das auf einer Hutprofiltragschiene (15) aufschnappbar ist und eine am Boden des Installationsgerätes (10) angeordnete Ausnehmung aufweist, an deren einer Wand eine feststehende und an deren anderer Wand eine bewegliche Nase (13) angeordnet sind, die beide hinter Längskanten einer Hutprofiltragschiene (15) aufrastbar sind, wobei die bewegliche Nase (13) an einem senkrecht zur Hutprofiltragschiene (15) und in der Befestigungsebene verschiebbar geführten Schieber (12) angebracht ist, der einen rechteckigen Rahmen aufweist, dessen Längsstege (16, 17) je einen Vorsprung (23, 24) tragen, mit dem der Schieber (12) in Nuten (70) am Installationsgerät geführt ist, wobei die Vorsprünge als Leisten (23, 24) ausgebildet sind, die aufeinanderzu weisen, und wobei am ersten Quersteg (18) die an der Hutprofiltragschiene (15) anliegende bewegliche Nase 13 angeformt ist **dadurch gekennzeichnet, daß** am ersten Quersteg (18) ein zum zweiten Quersteg vorspringender federnder Arm (20) angeformt ist, an dem eine zum Installationsgerät vorspringende Nase (25) angeordnet ist, so daß der Schieber (12) von der Schmalseite des Installationsgerätes (10) an dem Installationsgerät anbringbar ist, in dem die Leisten (23, 24) in die daran angepaßte Nuten (70) greifen und darin verschiebbar sind und die Nase (25) in einer Vertiefung (26) an der Befestigungsseite des Installationsgerätes (10) einrastet.

2. Schnellbefestigung nach Anspruch 1, **dadurch gekennzeichnet, daß** die federnde Nase (13) V-förmig ausgebildet ist, wobei ein Schenkel (27) der V-Form am ersten Quersteg (18) anschließt und am freien Schenkel (28) eine Stufung (32) vorgesehen ist, hinter die die Hutprofiltragschiene (15) eingreift, und daß die offene Seite der V-Form zum Boden des Installationsgerätes hin gerichtet ist.

3. Schnellbefestigung nach Anspruch 2, **dadurch gekennzeichnet, daß** der eine, am ersten Quersteg (18) anschließende Schenkel (27) der V-Form den ersten Quersteg (18) senkrecht zur Rahmenebene auf der Seite der Rahmenebene, an der der federnde Arm (20) am ersten Quersteg (18) angeformt ist, überragt.

4. Schnellbefestigung nach Anspruch 3, **dadurch gekennzeichnet, daß** das freie Ende des freien Schenkel (28) der V-Form in Abstand zu der Seite der Rahmenebene, die derjenigen, in deren Bereich der federnde Arm (20) und der Schenkel (27) der V-Form angeformt ist, entgegengesetzt liegt, in Abstand zu dieser Seite des Rahmens endet, so daß dieser Abstandsbereich als Anschlag für den Schieber (12) dient.

5. Schnellbefestigung nach einem der vorherigen Ansprüche, **dadurch gekennzeichnet, daß** der federnde Arm (20) den zweiten Quersteg (19) überragt.

6. Schnellbefestigung nach einem der Ansprüche 1 bis 5, mit einer am Installationsgerät (10) angeschlossenen Sammelschienenanordnung (40), **dadurch gekennzeichnet, daß** an dessen zum Installationsgerät (10) hinweisenden Seitenwand eine Haltenase (43) angeformt ist, die das Ende des federnden Armes (20) auf dessen der Hutprofiltragschiene (15) entgegenge setzten Seite überdeckt, wobei der Arm (20) und die Haltenase (43) so bemessen und aufeinander abgestimmt sind, daß durch Verschwenken des montierten Installationsgerätes die Nase (25) aus der Vertiefung (26) frei kommt, wobei die Haltenase (43) den federndem Arm so lange festhält, so daß das Installationsgerät (10) bezogen auf den Schieber (12) soweit verschiebbar ist, daß es von den Anschlußfahnen (42) der Sammelschienenanordnung freikommt und einfach heraushebbar ist.

7. Schnellbefestigung nach einem der vorherigen Ansprüche, **dadurch gekennzeichnet, daß** der Abstand der entgegengesetzt liegenden Außenflächen der Längsstege (16, 17) der Normbreite eines Installationsschaltgerätes entspricht.

8. Schnellbefestigung nach Anspruch 7, **dadurch gekennzeichnet, daß** die Breite der beweglichen Nase (13), gemessen in Richtung des Abstandes der Längsstege (16, 17) der Breite des Schiebers und damit der Normbreite eines Moduls eines Installationsgerätes entspricht.

## Claims

1. Quick-release attachment for an electrical service device (10), which can be snapped onto a top-hat profile mounting rail (15) and has a recess which is arranged at the bottom of the service device (10) and on one of whose walls a stationary tab (13) is arranged and on whose other wall a moving tab (13) is arranged, which two tabs (13) can be latched on behind longitudinal edges of a top-hat profile mounting rail (15), with the moving tab (13) being fitted to a slide (12) which is guided such that it can move vertically with respect to the top-hat profile mounting rail (15) and on the attachment plane and has a rectangular frame, whose longitudinal webs (16, 17) each have a projection (23, 24), by means of which the slide (12) is guided in grooves (70) on the service device, with the projections being in the form of strips (23, 24) which point towards one another, and with the moving tab (13) which rests on the top-hat profile mounting rail (15) being integrally formed on the first lateral web (18), **characterized in that** a sprung arm (20) which projects with respect to the second lateral web is integrally formed on the first lateral web (18), on which arm (20) a tab (25) which projects with respect to the service device is arranged, so that the slide (12) can be fitted to the service device from the narrow face of the service device (10), in which service device the strips (23, 24) engage in grooves (70) which match them, and can be moved in these grooves (70), and the tab (25) latches into a depression (26) on the attachment face of the service device (10).

2. Quick-release attachment according to Claim 1, **characterized in that** the sprung tab (13) is V-shaped, with one limb (27) of the V-shape being adjacent to the first lateral web (18), and with a step (32) being provided on the free limb (28), behind which the top-hat profile mounting rail (15) engages, and **in that** the open side of the V-shape points towards the bottom of the service device.

3. Quick-release attachment according to Claim 2, **characterized in that** the first limb (27), which is adjacent to the first lateral web (18), of the V-shape overhangs the first lateral web (18) at right angles to the frame plane on that side of the frame plane on which the sprung arm (20) is integrally formed on the first lateral web (18).

4. Quick-release attachment according to Claim 3, **characterized in that** the free end of the free limb (28) of the V-shape ends at a distance from that side of the frame plane which is located opposite that in whose area the sprung arm (20) and the limb (27) of the V-shape are integrally formed, at a distance from this side of the frame, so that this distance area acts as a stop for the slide (12).

5. Quick-release attachment according to one of the preceding claims, **characterized in that** the sprung arm (20) overhangs the second lateral web (19).

6. Quick-release attachment according to one of Claims 1 to 5, having a busbar arrangement (40) which is connected to the service device (10), **characterized in that** a holding tab (43) is integrally formed on its side wall which faces the service device (10), and covers the end of the sprung arm (20) on its side opposite the top-hat profile mounting rail (15), with the arm (20) and the holding tab (43) being designed and matched to one another such that the tab (25) is released from the depression (26) by pivoting of the installed service device, with the holding tab (43) holding the sprung arm firmly until the service device (10) can be moved with respect to the slide (12) sufficiently that it is released from the connecting lugs (42) on the busbar arrangement, and can easily be lifted out.

7. Quick-release attachment according to one of the preceding claims, **characterized in that** the distance between the outer surfaces of the longitudinal webs (16, 17) which are located opposite one another corresponds to the standard width of a service switching device.

8. Quick-release attachment according to Claim 7, **characterized in that** the width of the moving tab (13), measured in the direction of the distance between the longitudinal webs (16, 17), corresponds to the width of the slide and thus to the standard width of a module of a service device.

## Revendications

1. Fixation rapide pour un appareil électrique d'installation (10) qui peut être encliqueté sur un rail support en profilé en chapeau (15) et présente un évidement qui est aménagé sur le fond de l'appareil électrique d'installation (10) et sur l'une des parois duquel est disposé un ergot fixe et sur l'autre paroi duquel est disposé un ergot mobile (13) qui peuvent tous deux s'encliqueter derrière des bords longitudinaux d'un rail support en profilé en chapeau (15), l'ergot mobile (13) étant prévu sur un coulisseau (12) qui est guidé avec possibilité de déplacement perpendiculairement au rail support en profilé en chapeau (15), dans le plan de fixation, et qui présente un châssis rectangulaire dont les cloisons longitudinales (16, 17) portent chacune une saillie (23, 24) par laquelle le coulisseau (12) est guidé dans des rainures (70) de l'appareil d'installation, les saillies étant conformées en rebords (23, 24) orientés l'un en direction de l'autre, et l'ergot mobile (13), qui est en appui contre le rail support à profilé en chapeau (15), étant aménagé sur la première cloison transversale (18), **caractérisée en ce qu'**il est prévu un bras (20) élastique qui fait saillie en direction de la deuxième cloison transversale et porte un ergot (25) faisant saillie en direction de l'appareil d'installation, de sorte que le coulisseau (12) peut être monté sur l'appareil d'installation (10) depuis le petit côté de l'appareil par le fait que les rebords (23, 24) s'engagent dans les rainures (70) adaptées et coulissent dans celles-ci et l'ergot (25) s'enclenche dans une cavité (26) sur le côté de fixation de l'appareil d'installation (10).

2. Fixation rapide selon la revendication 1, **caractérisée en ce que** l'ergot élastique (13) est conformé en V, une branche (27) de la forme en V se raccordant à la première cloison transversale (18) et la branche libre (28) comportant un épaulement (32) derrière lequel s'engage le rail support en profilé en chapeau (15), et **en ce que** le côté ouvert de la forme en V est orienté en direction du plancher de l'appareil d'installation.

3. Fixation rapide selon la revendication 2, **caractérisée en ce que** la branche (27) de la forme en V qui est raccordée à la première cloison transversale (18) dépasse par rapport à cette première cloison transversale (18), perpendiculairement au plan du châssis, sur le côté du plan du châssis où le bras (20) élastique est formé sur la première cloison transversale (18).

4. Fixation rapide selon la revendication 3, **caractérisée en ce que** l'extrémité libre de la branche libre (28) de la forme en V se termine à distance du côté du plan de châssis qui est opposé à celui où le bras (20) élastique et la branche (27) de la forme en V sont formés, de sorte que cette zone d'espacement sert de butée au coulisseau (12).

5. Fixation rapide selon une des revendications précédentes, **caractérisée en ce que** le bras (20) élastique dépasse par rapport à la deuxième cloison transversale (19).

6. Fixation rapide selon une des revendications 1 à 5, comprenant un agencement de barre collectrice (40) connecté à l'appareil d'installation, **caractérisée en ce que** la paroi latérale de cet agencement qui est tournée en direction de l'appareil d'installation (10) porte un ergot de maintien (43) qui recouvre l'extrémité du bras (20) élastique, sur le côté de celui-ci qui est éloigné du rail support en profilé en chapeau (15), le bras (20) et l'ergot de maintien (43) ayant des dimensions telles et étant adaptés l'un à l'autre de manière telle que le pivotement de l'appareil d'installation monté libère l'ergot (25) de la cavité (26), l'ergot de maintien (43) retenant le bras élastique jusqu'à ce que l'appareil d'installation (10) puisse être déplacé par rapport au coulisseau (12) d'une distance telle qu'il se dégage des pattes de connexion (42) de l'agencement de barre collectrice et puisse être retiré facilement.

7. Fixation rapide selon une des revendications précédentes, **caractérisée en ce que** l'espacement entre les faces extérieures opposées des cloisons longitudinales (16, 17) correspond à la largeur normalisée d'un appareil électrique d'installation.

8. Fixation rapide selon la revendication 7, **caractérisée en ce que** la largeur de l'ergot mobile (13), mesurée dans le sens de l'espacement des cloisons longitudinales (16, 17), correspond à la largeur du coulisseau et donc à la largeur normalisée d'un module d'un appareil d'installation.
